# EUROPÄISCHE PATENTSCHRIFT

(11) **EP 1 205 428 B1**
(45) Veröffentlichungstag und Bekanntmachung des Hinweises auf die Patenterteilung: **08.09.2004**
(21) Anmeldenummer: 01125725.0
(22) Anmeldetag: 27.10.2001
(51) Int. Cl.: B66F 9/075, B60Q 1/06

(54) **Flurförderzeug mit einer Hubvorrichtung und einem Arbeitsscheinwerfer**
Industrial truck with a lifting device and a spotlight
Chariot de manutention avec un dispositif de levage et un projecteur

(30) Priorität: 08.11.2000 DE 10055264
(43) Veröffentlichungstag der Anmeldung: 15.05.2002
(73) Patentinhaber: STILL GMBH, D-22113 Hamburg (DE)
(72) Erfinder: Tödter, Joachim, Dr.-Ing., 22941 Bargteheide (DE); Baumann, Peter, Dipl.-Ing., 22941 Bargteheide (DE)
(74) Vertreter: Lang, Michael

(56) Entgegenhaltungen:
- CA-A- 2 144 886
- US-A- 4 224 657

## Beschreibung

Die Erfindung betrifft ein Flurförderzeug mit einer Hubvorrichtung und mindestens einem Arbeitsscheinwerfer zur Ausleuchtung des Arbeitsbereiches der Hubvorrichtung, der verstellbar befestigt ist, wobei die Hubvorrichtung mit dem Arbeitsscheinwerfer in einer die Verstellung des Arbeitsscheinwerfers abhängig von der Hubhöhe steuernden Wirkverbindung steht.

Flurförderzeuge, insbesondere Gabelstapler, werden häufig mit einem Arbeitsscheinwerfer versehen, der fest am Hubgerüst oder am Fahrerschutzdach montiert ist. Der Lichtkegel eines solchen Arbeitsscheinwerfers ist nach der Montage entweder auf den Boden vor dem Flurförderzeug ausgerichtet, also auf den Lastaufnahmebereich, oder auf die bevorzugte Hubhöhe, also auf den Lastabgabebereich. Gelegentlich werden auch mehrere Arbeitsscheinwerfer eingesetzt, um mehr als eine Stelle des Arbeitsbereiches der Hubvorrichtung auszuleuchten.

Durch die Verwendung von nur einem oder von nur wenigen Arbeitsscheinwerfem kann nur eine unbefriedigende Ausleuchtung des Arbeitsbereichs der Hubvorrichtung erzielt werden, denn es muss aus relativ kurzem Abstand eine große Fläche (vom Boden bis zur maximalen Hubhöhe) ausgeleuchtet werden. Erst die Verwendung einer größeren Anzahl von Arbeitsscheinwerfem führt zu einer ausreichenden Ausleuchtung des Arbeitsbereiches der Hubvorrichtung, setzt allerdings eine entsprechende Energieversorgung voraus. Hinzu kommt, dass bei den gängigen, batterie-elektrischen Flurförderzeugen die Batteriespannung mittels teurer Spannungswandler auf die Lampenspannung herabgesetzt werden muß. In den Spannungswandlern wird dabei eine erhebliche Verlustleistung erzeugt, die in Form von Verlustwärme abgeführt werden muß. Zudem erfordem die Spannungswandler ausreichend Einbauraum im Fahrzeug.

Aus der US-A-4 224 657 ist bekannt, welche dem Oberbegriff der unabhängigen Ansprüche 1 und 5 entspricht, Scheinwerfer zur Ausleuchtung des Arbeitsbereichs so an einer Lastaufnahmevorrichtung anzubringen, dass diese zusammen mit der Lastaufnahmevorrichtung bewegt werden und somit auch bei veränderter Hubhöhe ständig auf den Bereich vor dem Lastaufnahmemittel ausgerichtet sind. Der Arbeitsscheinwerfer ist daher sowohl bei abgesenkter als auch bei angehobener Hubvorrichtung auf den Lastbereich ausgerichtet und auch in beliebigen Zwischenstellungen. Der Arbeitsbereich ist insgesamt erheblich besser ausgeleuchtet. Da erheblich weniger Arbeitsscheinwerfer zur optimalen Ausleuchtung des Arbeitsbereiches der Hubvorrichtung benötigt werden (im günstigtsen Fall nur einer), verringert sich auch die Anzahl der benötigten Spannungswandler und damit die in das Fahrzeug abzuführende Verlustleistung. Zudem wird der Platzbedarf für den Einbau der Spannungswandler in das Fahrzeug verringert. Eine andere Ausrichtung als direkt auf das Lastaufnahmemittel ist allerdings nicht möglich. Durch die Anbringung am Lastaufnahmemittel können die Scheinwerfer leicht beschädigt werden und es sind bei großen Hubhöhen lange Stromzuführungskabel erforderlich. Dies bedeutet einen erheblichen Aufwand bei der Herstellung und Instandhaltung des Flurförderzeugs und hohe Leitungsverluste und damit großen Energieverbrauch im Betrieb.

Der vorliegenden Erfindung liegt die Aufgabe zu Grunde, ein Flurförderzeug der eingangs genannten Art zur Verfügung zu stellen, bei dem mit geringem Aufwand eine gute Ausleuchtung des Arbeitsbereiches der Hubvorrichtung zu erzielbar ist.

Diese Aufgabe wird erfindungsgemäß dadurch gelöst, dass Mittel zum Erfassen der Position der Hubvorichtung vorgesehen sind, die an Mittel zum Steuern der Verstellung des Arbeitsscheinwerfers angeschlossen sind, welche mit Mitteln zum Verstellen des Arbeitsscheinwerfers in Verbindung stehen. Die Hubhöhe der Hubvorrichtung wird mittlerweile bei vielen Flurförderzeugen aus anderen Gründen ohnehin erfasst, z. B. für Sicherheitsfunktionen wie die Hubhöhenbegrenzung in Abhängigkeit vom Neigungswinkel des Hubgerüstes. Ausgehend von diesem Wert läßt sich dann eine Steuervorrichtung beeinflussen, mit deren Hilfe der Arbeitsscheinwerfer hubhöhenabhängig verstellt wird. Durch die Erfindung werden die Nachteile des Standes der Technik vermieden.

Eine günstige Weiterbildung der Erfindung sieht vor, dass die Mittel zum Erfassen der Position der Hubvorrichtung einen auf der Hubvorrichtung angebrachten und mit dieser auf- und abbewegbaren Sender umfassen. Dabei richtet sich der Arbeitsscheinwerfer selbsttätig auf den Sender aus.

Zweckmäßigerweise umfassen die Mittel zum Verstellen des Arbeitsscheinwerfers einen Stellantrieb, der einen Elektromotor aufweist.

Sofern der Elektromotor als Schrittmotor ausgebildet ist, kann die Lage der Motorwelle und damit der Verstellwinkel des Arbeitsscheinwerfers sehr genau vorgegeben werden.

Die Aufgabe wird weiterhin dadurch gelöst, dass die Hubvorrichtung und der Arbeitsscheinwerfer mechanisch zwangsgekoppelt sind, indem die Hubvorrichtung und der Arbeitsscheinwerfer durch einen Seilzug miteinander verbunden sind. Der Seilzug kann mit seinem einen Ende auf einer Seite des ausfahrbaren Mastteiles eines Hubgerüstes oder an einem Gabelträger befestigt sein und mit seinem anderen Ende an einer Welle, auf der der Arbeitsscheinwerfer verstellbar ist. Auch hierbei werden die Nachteile des Stands der Technik behoben.

Die Wirkverbindung zwischen der Hubvorrichtung und dem Arbeitsscheinwerfer kann unabhängig von der Art der Betätigung - mechanisch, elektrisch, etc. - so abgestimmt werden, dass eine zur Bewegung der Hubvorrichtung synchrone Bewegung des Arbeitsscheinwerfers erfolgt. Es ist aber auch möglich, eine Folgesteuerung vorgesehen, bei der der Lichtkegel des Arbeitsscheinwerfers der Hubvorrichtung vorzugsweise vorauseilt. Dabei kann z. B. der für das Einstapeln einer Last vorgesehene Regalbereich bereits angestrahlt werden, bevor er von der Hubvorrichtung erreicht wird.

Es erweist sich ferner als günstig, wenn die Hubvorrichtung mit Mitteln zur Hubhöhenvorwahl in Wirkverbindung steht, wobei der Arbeitsscheinwerfer nach dem Vorwählen der Hubhöhe zu Beginn des Bewegungsvorgangs selbsttätig auf die vorgewählte Hubhöhe ausrichtbar ist. Der Lichtkegel des Arbeitsscheinwerfers wird also zunächst auf die vorgewählte Stelle gerichtet.

Es versteht sich von selbst, dass das erfindungsgemäße Flurförderzeug auch mit mehreren Arbeitsscheinwerfem ausgestattet werden kann, die in der vorbeschriebenen Weise mit der Hubvorrichtung in Wirkverbindung stehen.

## Patentansprüche

1. Flurförderzeug mit einer Hubvorrichtung und mindestens einem Arbeitsscheinwerfer zur Ausleuchtung des Arbeitsbereiches der Hubvorrichtung, der verstellbar befestigt ist, wobei die Hubvorrichtung mit dem Arbeitsscheinwerfer in einer die Verstellung des Arbeitsscheinwerfers abhängig von der Hubhöhe steuernden Wirkverbindung steht, **dadurch gekennzeichnet, dass** Mittel zum Erfassen der Position der Hubvorichtung vorgesehen sind, die an Mittel zum Steuern der Verstellung des Arbeitsscheinwerfers angeschlossen sind, welche mit Mitteln zum Verstellen des Arbeitsscheinwerfers in Verbindung stehen.

2. Flurförderzeug nach Anspruch 1, **dadurch gekennzeichnet, dass** die Mittel zum Erfassen der Position der Hubvorrichtung einen auf der Hubvorrichtung angebrachten und mit dieser auf- und abbewegbaren Sender umfassen.

3. Flurförderzeug nach Anspruch 1 oder 2, **dadurch gekennzeichnet, dass** die Mittel zum Verstellen des Arbeitsscheinwerfers einen Stellantrieb umfassen, der einen Elektromotor aufweist.

4. Flurförderzeug nach Anspruch 3, **dadurch gekennzeichnet, dass** der Elektromotor als Schrittmotor ausgebildet ist.

5. Flurförderzeug mit einer Hubvorrichtung und mindestens einem Arbeitsscheinwerfer zur Ausleuchtung des Arbeitsbereiches der Hubvorrichtung, der verstellbar befestigt ist, wobei die Hubvorrichtung mit dem Arbeitsscheinwerfer in einer die Verstellung des Arbeitsscheinwerfers abhängig von der Huhh,öhe steuernden Wirkverbindung steht, **dadurch gekennzeichnet dass** die Hubvorrichtung und der Arbeitsscheinwerfer mechanisch zwangsgekoppelt sind, indem die Hubvorrichtung und der Arbeitsscheinwerfer durch einen Seilzug miteinander verbunden sind.

6. Flurförderzeug nach einem der Ansprüche 1 bis 5, **dadurch gekennzeichnet, dass** die Hubvorrichtung mit Mitteln zur Hubhöhenvorwahl in Wirkverbindung steht, wobei der Arbeitsscheinwerfer nach dem Vorwählen der Hubhöhe zu Beginn des Bewegungsvorgangs selbsttätig auf die vorgewählte Hubhöhe ausrichtbar ist.

7. Flurförderzeug nach einem der Ansprüche 1 bis 6, **dadurch gekennzeichnet, dass** eine Folgesteuerung vorgesehen ist, bei der der Lichtkegel des Arbeitsscheinwerfers der Hubvorrichtung vorzugsweise vorauseilt.

## Claims

1. Industrial truck with a lifting device and at least one spotlight for illuminating the working area of the lifting device, which is fixed such that it can be adjusted, the lifting device being operatively connected to the spotlight in a manner controlling the adjustment of the spotlight on the basis of the lifting height, **characterized in that** means are provided for registering the position of the lifting device and are connected to a means for controlling the adjustment of the spotlight, which are connected to means for adjusting the spotlight.

2. Industrial truck according to Claim 1, **characterized in that** the means for registering the position of the lifting device comprise a transmitter that is fitted to the lifting device and can be moved up and down with the latter.

3. Industrial truck according to Claim 1 or 2, **characterized in that** the means for adjusting the spotlight comprise an actuating drive which has an electric motor.

4. Industrial truck according to Claim 3, **characterized in that** the electric motor is designed as a stepping motor.

5. Industrial truck with a lifting device and at least one spotlight for illuminating the working area of the lifting device, which is fixed such that it can be adjusted, the lifting device being operatively connected to the spotlight in a manner controlling the adjustment of the spotlight on the basis of the lifting height, **characterized in that** the lifting device and the spotlight are mechanically positively coupled, by the lifting device and the spotlight being connected to each other via a pull cable.

6. Industrial truck according to one of Claims 1 to 5, **characterized in that** the lifting device is operatively connected to the means for preselecting the lifting height, it being possible for the spotlight to be aligned automatically to the preselected lifting height at the start of the movement operation after the lifting height has been preselected.

7. Industrial truck according to one of Claims 1 to 6, **characterized in that** a sequence control system is provided, in which the cone of light from the spotlight preferably precedes the lifting device.

## Revendications

1. Chariot de manutention avec un dispositif de levage et au moins un projecteur pour éclairer la zone de travail du dispositif de levage, qui est fixé de manière réglable, le dispositif de levage avec le projecteur étant en liaison coopérante commandant le réglage du projecteur en fonction de la hauteur de levage, **caractérisé en ce que** l'on prévoit des moyens pour détecter la position du dispositif de levage, lesquels sont raccordés à des moyens pour commander le réglage du projecteur, lesquels sont en liaison avec des moyens pour régler le projecteur.

2. Chariot de manutention selon la revendication 1, **caractérisé en ce que** les moyens pour détecter la position du dispositif de levage comprennent un émetteur monté sur le dispositif de levage et pouvant se déplacer de haut en bas avec celui-ci.

3. Chariot de manutention selon la revendication 1 ou 2, **caractérisé en ce que** les moyens pour régler le projecteur comprennent un entraînement de réglage qui présente un moteur électrique.

4. Chariot de manutention selon la revendication 3, **caractérisé en ce que** le moteur électrique est réalisé sous la forme d'un moteur pas à pas.

5. Chariot de manutention comprenant un dispositif de levage et au moins un projecteur pour éclairer la zone de travail du dispositif de levage, qui est fixé de manière réglable, le dispositif de levage avec le projecteur étant en liaison coopérante commandant le réglage du projecteur en fonction de la hauteur de levage, **caractérisé en ce que** le dispositif de levage et le projecteur sont accouplés par force mécaniquement, **en ce que** le dispositif de levage et le projecteur sont connectés l'un à l'autre par un câble Bowden.

6. Chariot de manutention selon l'une quelconque des revendications 1 à 5, **caractérisé en ce que** le dispositif de levage est en liaison coopérante avec des moyens de présélection de la hauteur de levage, le projecteur pouvant être orienté automatiquement à la hauteur de levage présélectionnée après la présélection de la hauteur de levage au début de l'opération de déplacement.

7. Chariot de manutention selon l'une quelconque des revendications 1 à 6, **caractérisé en ce qu'**il est prévu une commande séquentielle dans laquelle le cône de lumière du projecteur est de préférence en avant du dispositif de levage.
